# EUROPÄISCHE PATENTSCHRIFT

(11) **EP 4 394 275 B1**
(45) Veröffentlichungstag und Bekanntmachung des Hinweises auf die Patenterteilung: **25.12.2024**
(21) Anmeldenummer: 22216865.0
(22) Anmeldetag: 28.12.2022
(51) Int. Cl.: F24F 13/14, E05F 15/63, F16K 1/22

(54) **BESCHLAGANORDNUNG**
FITTING ASSEMBLY
AGENCEMENT DE FERRURE

(43) Veröffentlichungstag der Anmeldung: 03.07.2024
(73) Patentinhaber: Wilh. Schlechtendahl & Söhne GmbH & Co. KG, 42579 Heiligenhaus (DE)
(72) Erfinder: ZACCARIA, Giovanni, 70771 Leinfelden-Echterdingen (DE)
(74) Vertreter: Von Rohr Patentanwälte Partnerschaft mbB

(56) Entgegenhaltungen:
- EP-A1- 2 775 121
- EP-A1- 2 966 281
- DE-A1- 10 015 978
- DE-A1- 102013 004 792
- DE-A1- 19 941 309
- DE-U1- 202011 051 971
- DE-U1- 202019 105 467

## Beschreibung

Die vorliegende Erfindung betrifft eine Beschlaganordnung für eine auf- oder zuschwenkbare und end- oder verriegelbare Lüftungsklappe einer Gebäudeöffnung, mit einer Antriebseinrichtung und eine Übertragungseinrichtung, wobei die Antriebseinrichtung und die Übertragungseinrichtung derart zusammenwirken, dass eine End- oder Verriegelung und eine anschließende Auf- und Zuschwenkung vorgesehen ist. Darüber hinaus betrifft die vorliegende Erfindung eine Lüftungsklappe mit einer erfindungsgemäßen Beschlaganordnung. Schließlich betrifft die vorliegende Erfindung auch eine Lüftungsanordnung mit einem Rahmen und einer erfindungsgemäßen Lüftungsklappe.

Die vorliegende Erfindung betrifft das technische Gebiet von Lüftungsklappen, die zur gesteuerten Zuleitung von Frischluft in Innenräume von Wohn- oder Geschäftsgebäuden eingesetzt werden. Hierzu ist die Lüftungsklappe schwenkbar an einem Rahmen angebunden, um eine zugeordnete Gebäudeöffnung bedarfsweise zu öffnen oder zu schließen. Durch die Wahl des Öffnungswinkels kann der Belüftungsstrom gesteuert werden, wobei eine optimale Lüftungsfunktion bei vergleichsweise großen Öffnungswinkeln von 90° oder mehr erzielt wird.

Gleichwohl ist die vorliegende Erfindung nicht auf Lüftungsklappen beschränkt. Insofern können die nachfolgenden Ausführungen auch auf sonstige verschwenkbare Klappen bzw. Verschlusselemente und/oder Verschlussanordnungen übertragen werden und gelten in gleicher Weise für diese.

Unter dem Gesichtspunkt einer modernen Erscheinungsform von Gebäuden, insbesondere Bürogebäuden, ist aus der Praxis ein gesteigerter Bedarf an Lüftungsklappen festzustellen, die in einer Schmalbauweise, d.h. mit einer möglichst geringen Breite, hergestellt sind. Eine Maximalbreite darf auch aus Sicherheitsgründen nicht überschritten werden, da bei zu großen Öffnungsweiten die Gefahr eines Herausfallens von Kindern oder sonstigen Personen besteht, was gerade beim Verbau der Lüftungsklappen in großen Höhen problematisch ist.

Derart dimensionierte Lüftungsklappen bzw. Lüftungsklappenanordnungen lassen sich platzsparend beispielsweise zwischen festen Verglasungen in Gebäudewände integrieren. Um trotz der geringen Breite eine ausreichende Luftzufuhr zu garantieren, müssen die in Rede stehenden Lüftungsklappen eine vergleichsweise große Länge aufweisen. Prinzipiell kann hierzu die insgesamt zur Verfügung stehende Raumhöhe, beginnend vom Boden bis hin zur Decke, ausgenutzt werden. Gleichzeitig mit der Belüftungsfunktion können die in Rede stehenden Lüftungsklappen bzw. Lüftungsanordnungen auch eine gewisse Stützfunktion bzw. Stützverstärkung innerhalb der zugeordneten Gebäudewand übernehmen.

Die geforderte Schmalbauweise ist notwendigerweise mit einem begrenzten Bauraum für die Beschlagelemente der Lüftungsklappe verbunden. Dies ist insofern problematisch, als dass neben der bloßen Verschwenkung der Lüftungsklappe auch entsprechende Bauteile zur Ver- bzw. Entriegelung der Lüftungsklappe verbaut werden müssen. Aufgrund der Vielzahl von gerade in Bürogebäuden verbauten Lüftungsklappen sollte zudem eine motorische und/oder individuelle Ansteuerung der Lüftungsklappen erfolgen, einhergehend mit entsprechenden Antriebsmodulen, die wiederum weiteren Bauraum beanspruchen. Es versteht sich, dass die Aufnahme der vorgenannten Bauteile bzw. Module verdeckt bzw. von außen nicht sichtbar erfolgen soll.

In diesem Zusammenhang ist es aus der Praxis bekannt, die Ver- bzw. Entriegelung einerseits sowie die Verschwenkung der Lüftungsklappe andererseits über zwei unterschiedliche Motorensysteme vorzunehmen, wobei die Verschwenkung unter Einsatz einer Kettenmotorik umgesetzt wird. Die Aufnahme der zwei unterschiedlichen Motorsysteme zusammen mit dem Kettenantrieb hat sich als aufwendig und letztlich wenig praktikabel erwiesen.

Aus der DE 20 2019 105 467 U1 ist eine Beschlaganordnung der eingangs genannten Art bekannt. Die bekannte Konstruktion umfasst ein Antriebsmodul mit einer Motoreinheit, einen Antriebshebel sowie ein Getriebe zur Verbindung des Antriebshebels mit der Motoreinheit. Das Getriebe ist eingerichtet, zunächst über den Antriebshebel durch eine lineare Translationsbewegung die Verriegelung der Lüftungsklappe aufzuheben, um im Anschluss daran über den Antriebshebel eine Rotationsbewegung auf die Lüftungsklappe zu übertragen. Die lineare Translationsbewegung zur Entriegelung wird dabei über eine Eckumlenkung auf eine Treibstange umgesetzt.

Dem Erfordernis einer möglichst platzsparenden Aufnahme der Bauelemente zur Ver- bzw. Entriegelung sowie zur Verschwenkung wird die in der DE 20 2019 105 467 U1 vorgeschlagene Konstruktion nicht hinreichend gerecht.

Nachteilig ist insbesondere die Ansteuerung der Ver- bzw. Entriegelung unter Einsatz einer Eckumlenkung. So muss zur Führung der Eckumlenkung eine entsprechende randseitige Mindestdicke bzw. Mindesthöhe der Lüftungsklappe bereitgestellt werden. Außerdem erfordert die Eckumlenkung einen erheblichen Platzbedarf, resultierend in einer relativ großen Breite der Lüftungsklappe. Darüber hinaus ist der Einsatz der Eckumlenkung konstruktiv aufwendig und wenig praktikabel, zumal lediglich eine einseitige Verriegelung über lediglich eine mit der Eckumlenkung verbundene Treibstange ermöglicht wird.

Aus der DE 2011 051 971 U1 geht eine Lüftungsklappe für Bauwerke hervor, wobei die Lüftungsklappe einen Rahmen, einen daran schwenkbar gelagerten Flügel und einen Klappenantrieb aufweist, wobei der Flügel einen Korpus aufweist, und der Klappenantrieb zumindest in Teilen versenkt innerhalb des Korpus angeordnet ist.

Aus der EP 2 775 121 A1 geht eine Klappeneinrichtung zum Steuern einer Fluidströmung, in einer Brennkraftmaschine mit einem Klappengehäuse hervor.

Die EP 2 966 281 A1 offenbart eine Klappeneinrichtung zum Steuern einer Fluidströmung, mit einem Klappengehäuse, das einen von der Fluidströmung durchströmbaren Kanalabschnitt umschließt.

Aus der DE 100 15 978 A1 geht eine Anordnung zur Verstellung einer Klappe für einen Luftführungskanal einer Heiz- oder Klimaanlage eines Kraftfahrzeuges hervor.

In der DE 199 41 309 A1 ist eine Anordnung zur Verstellung einer Klappe für einen Luftführungskanal einer Heiz- oder Klimaanlage eines Kraftfahrzeuges beschrieben.

Die DE 10 2013 004 792 A1 offenbart eine Klappenverriegelungsanordnung für eine schwenkbare Klappe eines Kraftfahrzeugs.

Aufgabe der vorliegenden Erfindung ist es nun, die vorgenannten Nachteile des Standes der Technik zu vermeiden oder aber zumindest im Wesentlichen zu reduzieren.

Erfindungsgemäß ist die Aufgabe bei einer Beschlaganordnung der eingangs genannten Art dadurch gelöst, dass die Übertragungseinrichtung eine drehbare Kulissenführung aufweist, die derart mit einem Antriebsmittel der Antriebseinrichtung zusammenwirkt, dass das lineare Verfahren des Antriebsmittels zu einer Relativbewegung der Kulissenführung in Drehrichtung relativ zum Antriebsmittel führt.

Im Zusammenhang mit dem Zustandekommen der Erfindung ist erkannt worden, dass durch die Umsetzung der Verschwenkung der Lüftungsklappe durch die drehbar gelagerte Kulissenführung eine kompakte Bauweise ermöglicht werden kann. Insbesondere ist es möglich, eine kombinierte Ver- bzw. Entriegelung sowie Verschwenkung einer Lüftungsklappe unter Vermeidung von am Randbereich der Lüftungsklappe geführter Beschläge, wie Eckumlenkungen, umzusetzen. Aufgrund des dadurch reduzierten bzw. optimierten Bauraumbedarfs lassen sich mit der erfindungsgemäßen Beschlaganordnung besonders filigran bzw. schmale Lüftungsklappen mit flachen Rahmenprofilen betreiben. Gleichzeitig ist die in Rede stehende, erfindungsgemäße Beschlaganordnung vollständig in der Lüftungsklappe aufnehmbar, wodurch eine verdeckte Aufnahme und eine kompakte und zweckgerichtete Integration ermöglicht wird.

Die Umwandlung der linearen Bewegungsrichtung des Antriebsmittels in die relative Drehbewegung der Kulissenführung kann dadurch erfolgen, dass die Kulissenführung wenigstens einen als Nut und/oder Schlitz ausgebildeten wendelförmigen Abschnitt aufweist. Das Antriebsmittel, welches zumindest mittelbar bzw. unter Einsatz weiterer Bauteile oder aber unmittelbar mit der Kulissenführung zusammenwirkt, ist in oder an dem wendelförmigen Abschnitt zwangsgeführt und/oder gelagert, derart, dass die lineare Verfahrbewegung des Antriebsmittels in eine relative Drehbewegung der Kulissenführung bzw. der mit der Kulissenführung verbundenen Bauteile umgewandelt wird.

Alternativ oder zusätzlich kann zur Umwandlung der Linearbewegung in eine Drehbewegung vorgesehen sein, dass die Kulissenführung wenigstens einen als Nut und/oder Schlitz ausgebildeten, schräg zur Bewegungsrichtung des Antriebsmittels verlaufenden Abschnitt aufweist.

Durch den Verlauf des wendelförmigen oder schrägen Abschnitts lässt sich die Öffnungs- bzw. Schließbewegung bedarfsweise anpassen. Je spitzer bzw. kleiner der Winkel des wendelförmigen bzw. schrägen Abschnitts gegenüber der linearen Bewegungsrichtung und/oder der Längsersterstreckung des Antriebsmittels gewählt wird, desto langsamer erfolgt die Relativverschwenkung der Kulissenführung zum Antriebsmittel bei gleichbleibender Verfahrgeschwindigkeit des Antriebsmittels. Dementsprechend erhöht sich die Verschwenkgeschwindigkeit mit ansteigendem Winkel des wendelförmigen bzw. schrägen Abschnitts. Bevorzugte Winkelbereiche, die von dem wendelförmigen bzw. schrägen Abschnitt der Kulissenführung mit Bezug auf die Linearbewegung und/oder Linearerstreckung des Antriebsmittels gebildet werden, liegen zwischen 20 und 60°, insbesondere 30 bis 50°.

Ebenfalls ist es möglich, durch Anpassung des wendelförmigen und/oder schräg verlaufenden Abschnitts, bei konstanter Verfahrgeschwindigkeit des Antriebsmittels, eine bei der Verschwenkung der Lüftungsklappe abnehmende oder zunehmende Öffnungsgeschwindigkeit bzw. Schließgeschwindigkeit der Lüftungsklappe umzusetzen. Dies kann insbesondere durch einen sich beim Verfahren des Antriebsmittels erhöhenden oder verkleinernden Winkel des wendelförmigen bzw. schrägen Abschnitts umgesetzt werden, um eine beschleunigte oder verzögerte Öffnungsbewegung der Lüftungsklappe zu realisieren.

Die Kulissenführung ermöglicht neben der Steuerung der Öffnungs- bzw. Schließbewegung auch eine einfach Umsetzung eines Links- bzw. Rechtsanschlags. Hierzu ist lediglich eine gespiegelte Ausbildung bzw. Anordnung des wendelförmigen und/oder schrägen Abschnitts notwendig, um einen Linksanschlag in einen Rechtsanschlag umzuwandeln und, umgekehrt, einen Rechtsanschlag in einen Linksanschlag umzuwandeln.

Die konstruktive Umsetzung entsprechend ausgebildeter Nuten und/oder Schlitze zur Ausbildung der Abschnitte der Kulissenführung sind dem Fachmann aufgrund seines Fachwissens bekannt. Insbesondere kann die Kulissenführung als Materialausnehmung bzw. Materialdurchbrechung und/oder durch mechanische Bearbeitung, beispielsweise durch Ausfräsen, Ausstanzen o. dgl., gebildet werden.

Gemäß einer bevorzugten Ausführungsform weist die Kulissenführung wenigstens zwei einander gegenüberliegende wendelförmige und/oder schräg verlaufende Abschnitte auf. Die gegenüberliegenden Abschnitte weisen dabei vorzugsweise die gleichen Steigungen bzw. Verläufe auf.

Dementsprechend ist ein Zusammenwirken des Antriebsmittels mit der Kulissenführung über die gegenüberliegenden Abschnitte, also an zwei Angriffspunkten, vorgesehen, so dass das Antriebsmittel stabil an der Kulissenführung zwangsgeführt bzw. gelagert ist. Insofern wird durch die beidseitige Einwirkung eine mechanisch stabile Anbindung zwischen Antriebsmittel und Kulissenführung ermöglicht.

Gemäß einer weiteren, bevorzugten Ausführungsform der Erfindung ist vorgesehen, dass die Kulissenführung wenigstens einen sich in Bewegungsrichtung des Antriebsmittels erstreckenden weiteren Abschnitt, der dem wendelförmigen und/oder schräg verlaufenden Abschnitt vor und/oder nachgelagert ist, aufweist.

Die Ausbildung eines vorgelagerten weiteren Abschnitts hat sich als vorteilhaft erwiesen, um vor der Verschwenkung der Kulissenführung relativ zum Antriebsmittel zunächst eine sichere Entriegelung der anschließend aufzuschwenkenden Lüftungsklappe umzusetzen. Dementsprechend erfolgt im Rahmen des Verfahrens des Antriebsmittels entlang des weiteren, vorgelagerten Abschnitts zunächst keine Relativverlagerung der Kulissenführung zum Antriebsmittel.

Das lineare Verfahren des Antriebsmittels kann dabei direkt auf wenigstens ein vorzugsweise als Treibstange ausgebildetes weiteres Beschlagteil übertragen werden, um eine Entriegelung der Lüftungsklappe im Einbauzustand zu ermöglichen. Nach dem Passieren des weiteren Abschnitts wird dann mit Erreichen des wendelförmigen oder schräg verlaufenden Abschnitts die Drehung der Kulissenführung relativ zum Antriebsmittel und letztlich das Aufschwenken der jetzt entriegelten Lüftungsklappe umgesetzt.

Dementsprechend wird sowohl die Ent- bzw. Verriegelung als auch die anschließende Verschwenkung unter Einsatz der erfindungsgemäß vorgesehenen Kulissenführung umgesetzt, wobei eine Drehung der Kulissenführung relativ zum Antriebsmittel nur beim Verfahren entlang des wendelförmigen und/oder schräg verlaufenden Abschnitts erfolgt.

Gemäß einer besonders bevorzugten Ausführungsform ist nicht nur ein vorgelagerter weiterer erster Abschnitt, sondern auch ein dem schräg verlaufenden oder wendelförmigen Abschnitt nachgelagerter weiterer zweiter Abschnitt vorgesehen. Nach dem vollständigem Passieren des wendelförmigen und/oder schräg verlaufenden Abschnitts wirkt das Antriebsmittel mit dem nachgelagerten weiteren zweiten Abschnitt zusammen, wodurch die weitere Aufschwenkbewegung der Lüftungsklappe gestoppt wird. Der sich anschließende lineare weitere zweite Abschnitt ermöglicht dabei eine definierte Endstellung der aufgeschwenkten Lüftungsklappe und somit eine definierte und/oder robuste Fixierung der Lüftungsklappe in der Öffnungsstellung. In der maximalen Öffnungsstellung wirkt das Antriebsmittel somit mit dem nachgelagerten Abschnitt derart zusammen, dass eine präzise und/oder widerstandsfähige Fixierung der Lüftungsklappe in der maximalen Öffnungsstellung realisiert ist.

Zum Schließen der Lüftungsklappe ausgehend von der maximalen Öffnungsstellung wird das Antriebsmittel entgegengesetzt zur Öffnungsbewegung linear verfahren, wobei bei Zusammenwirken mit dem weiteren, nachgelagerten Abschnitt keine Drehung der Kulissenführung erfolgt. Durch das Zusammenwirken mit dem sich anschließenden wendelförmigen oder schräg verlaufenden Abschnitt erfolgt dann eine Umsetzung der Schließbewegung. Mit Erreichen des vorgelagerten weiteren Abschnitts ist die Schließbewegung beendet, wobei über das weitere Verfahren im vorgelagerten weiteren Abschnitt eine Verriegelung der Lüftungsklappe am Rahmen erfolgt, sodass sich die Lüftungsklappe nach Beendigung des Verfahrens des Antriebsmittels in einer verriegelten Schließposition befindet. Die Entriegelung mit anschließender Öffnungsbewegung der Lüftungsklappe kann gemäß den obigen Ausführungen erneut umgesetzt werden.

Vorzugsweise ist die Kulissenführung an einem einen Hohlzylinder aufweisenden und/oder einen Hohlzylinder ausbildenden Übertragungsmittel vorgesehen. Dementsprechend sind die Abschnitte der Kulissenführung als Nut- und/oder Schlitzabschnitte oder als sonstige Materialausnehmungen und/oder Materialdurchbrechungen am Übertragungsmittel bzw. Hohlzylinder eingebracht, beispielsweise mechanisch durch Einfräsen oder dergleichen. Insofern fungiert das Übertragungsmittel als Kulissenträger, an dem die Kulissenführung ausgebildet und/oder angeordnet ist.

In diesem Zusammenhang hat es sich als vorteilhaft herausgestellt, wenn das Übertragungsmittel in einem an der Antriebseinrichtung befestigten Gehäuse drehgelagert ist. Die Drehlagerung erfolgt dabei derart, dass die Antriebseinrichtung und/oder das Gehäuse stationär bzw. fest an der Lüftungsklappe gehalten ist bzw. sind, wohingegen eine Drehbarkeit des Übertragungsmittels relativ zur Lüftungsklappe bzw. zur Antriebseinrichtung realisierbar ist.

Gemäß einer besonders bevorzugten Ausführungsform ist dabei vorgesehen, dass das Gehäuse ein erstes Gehäuseende zur Befestigung an der Antriebseinrichtung und Drehlagerung des Übertragungsmittels und ein zweites Gehäuseende zur Drehlagerung des Übertragungsmittels aufweist, wobei, vorzugsweise, das erste Gehäuseende mit dem zweiten Gehäuseende über eine Mehrzahl von voneinander beabstandeten, insbesondere stabförmigen, Verbindungsmitteln verbunden ist.

Dies ermöglicht einen kompakten Gehäuseaufbau, wobei das Übertragungsmittel nicht vollständig eingekapselt ist, sondern aufgrund der voneinander beabstandeten Verbindungsmittel weiterhin von außen sichtbar und/oder zugänglich ist. Der bevorzugt vorgesehene Gehäuseaufbau ist zudem material- und/oder kostensparend, da maßgeblich auf Standardbauteile bzw. Standardprofilierungen zurückgegriffen werden kann. Insbesondere ist das Übertragungsmittel käfigartig im Gehäuse gehalten.

Vorzugsweise weist das Gehäuse eine quader- oder würfelförmige Außenkontur auf, wobei bevorzugt vier Verbindungmittel vorgesehen sind, die jeweils an Eckpunkten bzw. Eckbereichen an der Außenkontur des Gehäuses angeordnet sind.

Besonders bevorzugt ist am Übertragungsmittel an seinem der Antriebseinrichtung abgewandten Ende eine vorzugsweise zylindrische Aufnahme für ein insbesondere als Ausstellarm ausgebildetes weiteres Beschlagteil zum Auf- und Zuschwenken der Lüftungsklappe vorgesehen.

Die Aufnahme ermöglicht eine insbesondere drehfeste Anbindung des weiteren Beschlagteils, so dass die relative Drehbewegung der Kulissenführung auf das weitere Beschlagteil übertragbar ist. Das weitere Beschlagteil ist insbesondere als Ausstellarm ausgebildet und mit einem an der Gebäudeöffnung angebundenen Rahmen verbindbar. Durch den drehbaren Antrieb des Ausstellarms erfolgt eine Aufschwenkung oder Zuschwenkung der Lüftungsklappe relativ zum Rahmen.

Besonders bevorzugt ist die Aufnahme durch das zweite Gehäuseende hindurchgeführt, was eine kompakte und/oder platzsparende Konstruktion ermöglicht.

Insbesondere ist im Bereich der Aufnahme ein insbesondere elastisches und/oder ringförmiges Entkopplungselement vorgesehen. Das Entkopplungselement ermöglicht im verbauten Zustand der Beschlaganordnung innerhalb der Lüftungsklappe eine Schallentkopplung zwischen Beschlaganordnung und angrenzenden Bauteilen bzw. Abschnitten der Lüftungsklappe. Dabei erfolgt die Anbindung der Beschlaganordnung mit der Lüftungsklappe durch Befestigung des zweiten Gehäuseendes mit einem gegenüberliegenden Abschnitt der Lüftungsklappe, beispielsweise durch Verschrauben.

Im verbauten Zustand befindet sich das elastische und/oder ringförmige Entkopplungselement daher, insbesondere klemmend, zwischen dem zweiten Gehäuseende und dem gegenüberliegenden Abschnitt der Lüftungsklappe, so dass eine direkte Kontaktierung angrenzender Metallflächen und letztlich eine unerwünschte Geräuschentwicklung vermieden wird.

Am Antriebsmittel ist ein mit der Kulissenführung zusammenwirkendes und/oder in die Kulissenführung eingreifendes Kopplungselement vorgesehen. Dementsprechend erfolgt das Zusammenwirken des Antriebsmittels mit der Kulissenführung mittelbar über ein vorzugsweises am Antriebsmittel gehaltenes Kopplungselement. Das Kopplungselement erstreckt sich vorzugsweise quer zur Bewegungsrichtung des Antriebsmittels und/oder ist stabförmig ausgebildet. Durch die stabförmige Ausbildung ist das Kopplungselement formschlüssig und/oder präzise innerhalb der Kulissenführung gehalten, so dass das Kopplungselement innerhalb und/oder entlang der Kulissenführung linear verfahrbar ist und in Abhängigkeit zum gewählten Verlauf der Abschnitte der Kulissenführung eine Relativverdrehung der Kulissenführung relativ zum Antriebsmittel umsetzt. Vorzugsweise ist mit dem Kopplungselement wenigstens ein insbesondere als Treibstange ausgebildetes Beschlagteil zur End- oder Verriegelung der Lüftungsklappe vorgesehen. Die Verfahrbarkeit des Kopplungselements geht dabei, insbesondere zu Beginn des Öffnungsvorgangs, mit einer entsprechenden Verschiebung der Treibstange einher, um im Vorfeld der Verschwenkung der Lüftungsklappe zunächst eine Entriegelung der Lüftungsklappe zu bewerkstelligen. Im Anschluss daran erfolgt dann durch Passieren des wendelförmigen oder schräg verlaufenden Abschnitts eine Verdrehung der Kulissenführung bzw. des Übertragungsmittels, um eine Verschwenkung der Lüftungsklappe umzusetzen.

Erfindungsgemäß ist vorgesehen, dass beidseitig am Kopplungselement als Treibstangen ausgebildete Beschlagelemente zur Ent- oder Verriegelung der Lüftungsklappe vorgesehen sind bzw. das Kopplungselement mit diesen zusammenwirkt. Durch diesen symmetrischen Aufbau wird eine besonders sichere Führung bzw. Lagerung der Treibstangen bzw. eine besonders zuverlässige Ver- und/oder Entriegelung der Lüftungsklappe an beiden Seiten gleichzeitig ermöglicht.

Insbesondere ist das Antriebsmittel innerhalb des Übertragungsmittels verfahrbar. Dies ermöglicht einen kompakten konstruktiven Aufbau, wodurch der durch die Beschlaganordnung eingenommene Bauraum weiter reduziert und damit optimiert wird.

Die Antriebseinrichtung weist vorzugsweise einen Spindelantrieb mit ausfahrbarer Spindel als Antriebsmittel, und/oder einen elektrischen, hydraulischen oder pneumatischen Motor, jeweils mit Zahnstange oder einem sonstigen Hubelement als Antriebsmittel, auf. Insofern ist die vorliegende Erfindung nicht auf eine bestimmte Antriebseinrichtung beschränkt. Letztlich sind hier vielfältige konstruktive Lösungen möglich.

Bevorzugt befindet sich das Antriebsmittel als linear verfahrbares Hubelement in einer maximal ausgefahrenen Stellung, wenn sich die Lüftungsklappe in der maximalen Öffnungsstellung befindet. Dementsprechend korrespondiert eine maximal eingefahrene Stellung des Antriebsmittels mit einer Schließstellung der Lüftungsklappe. Besonders bevorzugt ist das Antriebsmittel stabartig ausgebildet und/oder weist einen Endabschnitt zur Aufnahme des Kopplungselements auf.

Weiterer Gegenstand der vorliegenden Erfindung ist eine Lüftungsklappe mit einer erfindungsgemäß ausgebildeten Beschlaganordnung. Die Beschlaganordnung ist vorzugsweise vollständig in einem Hohlraum der Lüftungsklappe aufgenommen und, mit Ausnahme des als Ausstellarm ausgebildeten Beschlagteils sowie etwaiger Treibstangen bzw. Verschlusspunkten zum Zusammenwirken mit dem Rahmen, im Betriebszustand von außen nicht sichtbar.

Schließlich betrifft die vorliegende Erfindung auch eine Lüftungsanordnung mit einem Rahmen und einer Lüftungsklappe wie zuvor definiert. Die Lüftungsklappe ist vorzugsweise schwenkbar am Rahmen angebunden. Der Rahmen ist mit Verriegelungsabschnitten versehen, die in der Schließposition mit korrespondierenden Verriegelungspunkten an der Lüftungsklappe zusammenwirken.

Weitere Merkmale, Vorteile und Anwendungsmöglichkeiten der vorliegenden Erfindung ergeben sich aus der nachfolgenden Beschreibung von Ausführungsbeispielen anhand der Zeichnung und der Zeichnung selbst. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Ansprüchen oder deren Rückbeziehung.

In diesem Zusammenhang versteht es sich, dass die oben beschriebenen und nachfolgend anhand der Zeichnung beschriebenen und gezeigten Merkmale bedarfsweise miteinander kombiniert werden können, auch wenn dies nicht im einzelnen ausdrücklich erwähnt ist. Einzelne Merkmale können isoliert von anderen beschriebenen oder gezeigten Merkmalen zur Weiterbildung der Erfindung herangezogen werden. Die gewählte Absatzformatierung steht einer Kombination von Merkmalen aus unterschiedlichen Absätzen nicht entgegen.

Es zeigt:
- Fig. 1: eine perspektivische Darstellung einer erfindungsgemäßen Beschlaganordnung,
- Fig. 2: eine perspektivische Darstellung eines Übertragungsmittels der erfindungsgemäßen Beschlaganordnung,
- Fig. 3: eine weitere perspektivische Darstellung des in Fig. 2 gezeigten Übertragungsmittels,
- Fig. 4: eine weitere perspektivische Darstellung der erfindungsgemäßen Beschlaganordnung ohne Übertragungsmittel,
- Fig. 5: eine ausschnittsweise perspektivische Darstellung einer Lüftungsklappe, in der die erfindungsgemäße Beschlaganordnung aufgenommen ist und
- Fig. 6: eine Vorderansicht einer Lüftungsanordnung mit einem Rahmen und einer mit einer erfindungsgemäßen Beschlaganordnung ausgerüsteten Lüftungsklappe.

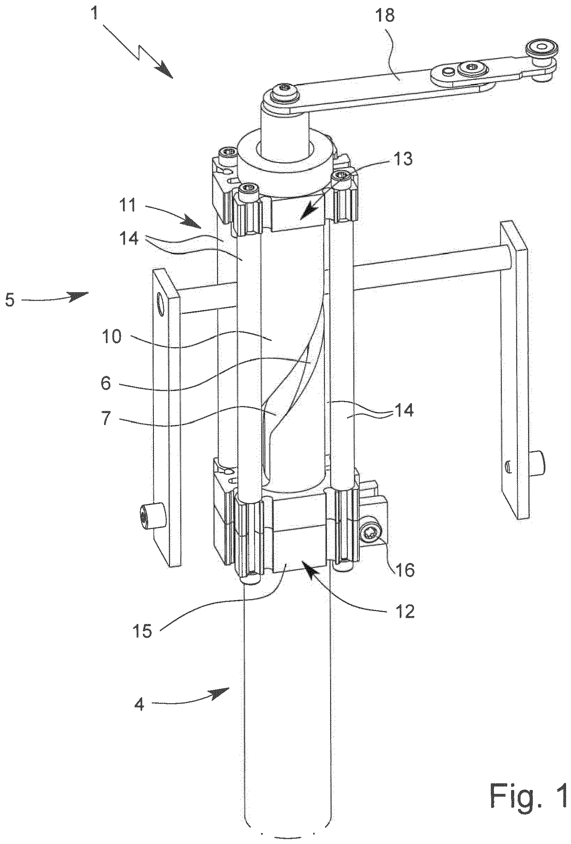

Fig. 1 zeigt in einer perspektivischen Darstellung eine vorschlagsgemäße Beschlaganordnung 1. Die Beschlaganordnung 1 ist für den Einsatz an und/oder in einer auf bzw. zuschwenkbaren Lüftungsklappe 2 vorgesehen.

Es versteht sich jedoch, dass die erfindungsgemäße Beschlaganordnung 1 im Zusammenhang mit anderen verschwenkbaren Verschlussanordnungen und/oder Verschlusselementen, wie Fenstern, Türflügeln o. dgl., einsetzbar ist.

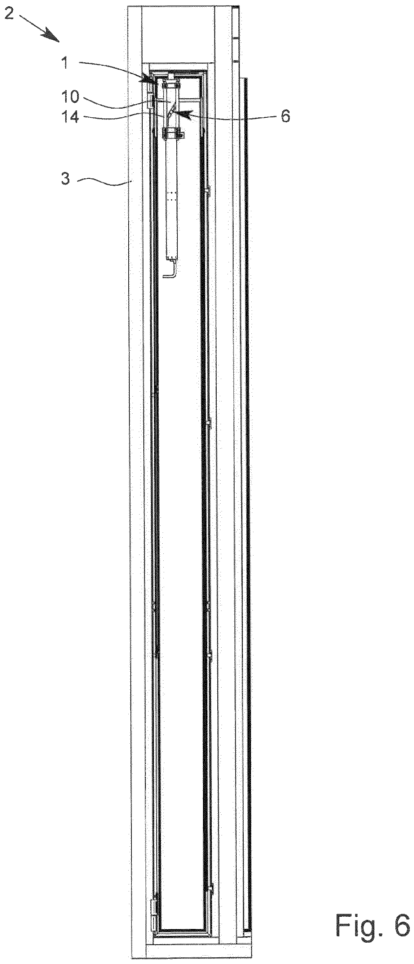

Bevorzugt ist jedoch der Einsatz der erfindungsgemäßen Beschlaganordnung 1 in einer langgestreckten bzw. schmalen Lüftungsklappe 2, wobei die Lüftungsklappe 2, wie in Fig. 6 illustriert, schwenkbar an einen Rahmen 3 angebunden ist und der Rahmen 3 einer entsprechenden Gebäudeöffnung zugeordnet und dort im Einbauzustand befestigt ist.

Die Beschlaganordnung 1 weist eine Antriebseinrichtung 4 und eine mit der Antriebseinrichtung 4 verbundene Übertragungseinrichtung 5 auf. Die Antriebseinrichtung 4 sowie die Übertragungseinrichtung 5 wirken derart miteinander zusammen, dass sowohl eine Ent- oder Verriegelung sowie eine anschließende Auf- und Zuschwenkung der Lüftungsklappe 2 realisierbar ist, wie nachfolgend im Detail erläutert wird.

Bei der Beschlaganordnung 1 ist vorgesehen, dass die Übertragungseinrichtung 5 eine drehbare Kulissenführung 6 aufweist, die derart mit einem Antriebsmittel 7 der Antriebseinrichtung 4 zusammenwirkt, dass das lineare Verfahren des Antriebsmittels 7 zu einer Relativbewegung der Kulissenführung 6 in Drehrichtung relativ zum Antriebsmittel 7 führt.

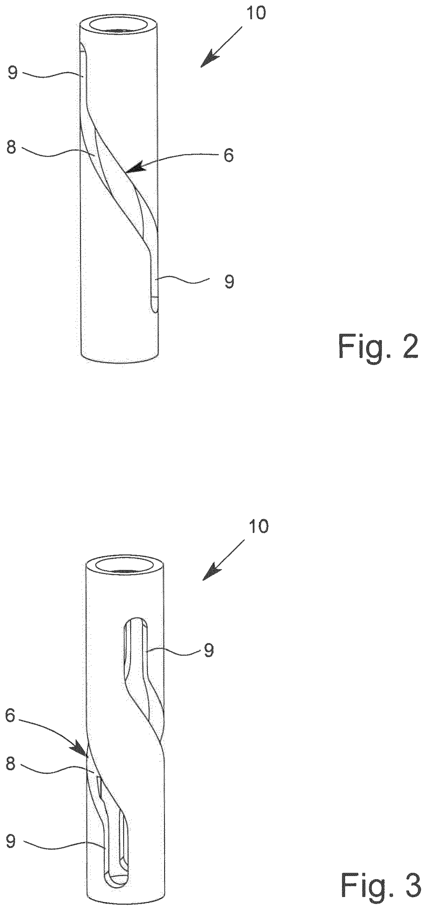

Nachfolgend wird anhand von Fign. 2 und 3 auf bevorzugte Ausgestaltungen der erfindungsgemäß vorgesehenen Kulissenführung 6 eingegangen.

Die Kulissenführung 6 weist wenigstens einen als Nut und/oder Schlitz ausgebildeten wendelförmigen Abschnitt 8 auf.

Nicht dargestellt ist, dass anstelle des wendelförmigen Abschnitts 8 oder auch zusätzlich zum wendelförmigen Abschnitt 8 auch ein schräg verlaufender Abschnitt oder ein sonstiger nicht-linear verlaufender Abschnitt vorgesehen sein kann. Insofern bestehen vielfältigste Möglichkeiten, um die Kulissenführung 6 auszubilden, mit der Maßgabe, dass das lineare Verfahren des Antriebsmittels 7 zu einer Verdrehung der Kulissenführung 6 führt.

Der wendelförmige Abschnitt 8 wirkt dementsprechend derart mit dem Antriebsmittel 7 zusammen, dass beim linearen Verfahren des Antriebsmittels 7 eine entsprechende Drehbewegung der Kulissenführung 6 bewirkbar ist.

Beim dargestellten, bevorzugten Ausführungsbeispiel weist die Kulissenführung 6 zwei einander gegenüberliegende wendelförmige Abschnitte 8 auf, wie aus Fig. 3 ersichtlich. Die gegenüberliegenden wendelförmigen Abschnitte 8 laufen dabei insbesondere spiegelverkehrt und/oder mit entgegengesetzten Steigungsverläufen zueinander.

Zur Ent- oder Verriegelung weist die Kulissenführung 6 wenigstens einen sich in Bewegungsrichtung des Antriebsmittels 7 erstreckenden weiteren Abschnitt 9 auf, der dem wendelförmigen Abschnitt 8 vorgelagert ist.

Beim dargestellten und bevorzugten Ausführungsbeispiel ist jedem wendelförmigen Abschnitt 8 einerseits ein weiterer Abschnitt 9 vorgelagert und andererseits ein weiterer Abschnitt 9 nachgelagert. Dadurch lassen sich entsprechende Vorteile im Hinblick auf eine Entriegelung der Lüftungsklappe 2 vor der anschließenden Verdrehung relativ zum Antriebsmittel 7 sowie eine sichere und/oder präzise definierte Positionierung der Lüftungsklappe 2 im vollständig geöffneten Zustand ermöglichen.

Wie ebenfalls anhand von Fig. 2 und 3 ersichtlich, ist die Kulissenführung 6 an einem Übertragungsmittel 10 der Übertragungseinrichtung 5 ausgebildet. Das Übertragungsmittel 10 weist dabei einen Hohlzylinder auf bzw. bildet einen als Hohlzylinder ausgebildeten Kulissenträger aus. Insofern bildet das Übertragungsmittel 10 das Kernstück der Übertragungseinrichtung 5, da es die Kulissenführung 6 aufweist und mittelbar oder unmittelbar mit dem Antriebsmittel 7 zusammenwirkt.

Es sind jedoch auch andere konstruktive Lösungen, beispielsweise eine von einem Hohlzylinder abweichende Ausbildung des Übertragungsmittels 10, wie eine konische Ausbildung, möglich. Auch kann es zweckmäßig sein, die Endabschnitte des Übertragungsmittels 10 verjüngend gegenüber dem mittleren Abschnitt, in welchem die Kulissenführung 6 angeordnet ist, auszubilden.

In Abhängigkeit zur erwünschten Öffnungsbewegung und/oder Öffnungsgeschwindigkeit kann eine Anpassung der Abschnitte 8, 9 der Kulissenführung 6 erfolgen. So lässt sich die Öffnungsbewegung entsprechend beschleunigen, je größer der Winkel des wendelförmigen Abschnitts 8 relativ zur Längsachse des Übertragungsmittels 10 ist. Umgekehrt verzögert sich die Öffnungsbewegung, wenn für den wendelförmigen Abschnitt 8 vergleichsweise geringe Winkelbereiche zur Längsachse des Übertragungsmittels 10 gewählt werden. Auch eine sich beschleunigende oder sich verzögernde Öffnungs- bzw. Schließbewegung lässt sich durch entsprechende Ausbildung der Kulissenführung 6 und/oder der wendelförmigen Abschnitte 8 erzielen.

Auch ein im Rahmen der Schwenkbewegung ansteigendes oder abfallendes Geschwindigkeitsprofil, bei gleichbleibender linearer Verfahrgeschwindigkeit des Antriebsmittels 7, lässt sich durch entsprechende Ausbildung des wendelförmigen Abschnitts 8 in praktisch einfacher Weise umsetzen.

Beim dargestellten und bevorzugten Ausführungsbeispiel ist die Kulissenführung 6 bzw. sind die Abschnitte 8, 9 als schlitzförmige Strecken, insbesondere in Form von Durchgriffsöffnungen, umfangseitig und/oder mantelseitig am Übertragungsmittel 10 eingebracht, beispielsweise mechanisch durch Einfräsen. Es sind jedoch auch andere technische Lösungen möglich.

Beim dargestellten und bevorzugten Ausführungsbeispiel ist das Übertragungsmittel 10 in einem Gehäuse 11 der Übertragungseinrichtung 5 aufgenommen. Das Gehäuse 11 ist mit der Antriebseinrichtung 4 verbunden.

Konkret weist das Gehäuse 11 ein erstes Gehäuseende 12 zur Befestigung an der Antriebseinrichtung 4 und Drehlagerung des Übertragungsmittels 10 und ein zweites Gehäuseende 13 zur Drehlagerung des Übertragungsmittels 10 auf. Die Gehäuseenden 12, 13 sind jeweils ringartig ausgebildet.

Das erste Gehäuseende 12 ist dabei mit der Antriebseinrichtung 4 vorzugsweise kraftschlüssig verbunden.

Zur Verbindung des ersten Gehäuseendes 12 mit dem zweiten Gehäuseende 13 sind voneinander beabstandete Verbindungsmittel 14 vorgesehen. Beim dargestellten und bevorzugten Ausführungsbeispiel sind die Gehäuseenden 13, 14 über vier stabförmige Verbindungsmittel 14 miteinander verbunden, die in Eckbereichen einer quaderförmigen Außenkontur des Gehäuses 11 angeordnet sind.

Durch die beabstandeten Verbindungsmittel 14 ist das Übertragungsmittel 10 käfigartig eingehaust und zumindest bereichsweise von außen weiterhin zugänglich.

Das erste Gehäuseende 12 ist vorzugsweise lösbar mit der Antriebseinrichtung 4 verbunden.

Beim dargestellten und bevorzugten Ausführungsbeispiel ist am ersten Gehäuseende 12 ein Klemmbauteil 15 ausgebildet, in welchem ein Endabschnitt der Antriebseinrichtung 4 klemmend aufgenommen ist. Die Verspannung des Klemmbauteils 15 mit der Antriebseinrichtung 4 erfolgt beim dargestellten bevorzugten Ausführungsbeispiel über ein mit dem Klemmbauteil 15 zusammenwirkendes Spannmittel 16, bei dem es sich beispielsweise um eine Schraube handeln kann. Die Ver- bzw. Entspannung des Klemmbauteils 15 mit der Antriebseinrichtung 4 erfolgt dann durch Betätigung des Spannmittels 16. Es sind jedoch auch andere konstruktive Ausgestaltungen möglich.

Beim Darstellungsbeispiel ist das Klemmbauteil 15 U-förmig mit zwei Schenkeln und einem Verbindungsabschnitt ausgebildet, wobei über das Spannmittel 16 die Schenkel zueinander verlagerbar sind. Im verbauten Zustand erfolgt dann die Klemmung der Antriebseinrichtung 4 zwischen den mittels des Spannmittels 16 verspannten Schenkeln des Klemmbauteils.

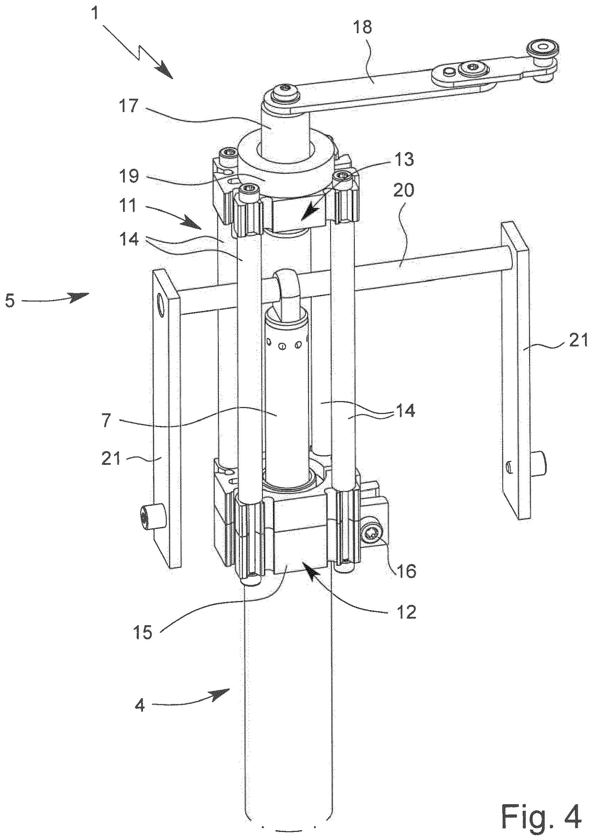

Wie anhand von Fig. 4 ersichtlich, weist die Übertragungseinrichtung 5 an ihrem der Antriebseinrichtung 4 abgewandten Ende eine vorzugsweise zylindrische Aufnahme 17 für ein als Ausstellarm ausgebildetes weiteres Beschlagteil 18 auf. Das Beschlagteil 18 ist als Anstell- bzw. Ausstellarm ausgebildet und mit dem Rahmen 3 koppelbar. Die durch die Antriebseinrichtung 4 erzeugte Kraft bzw. das Drehmoment wird zum Auf- oder Zuschwenken der Lüftungsklappe 2 über das weitere Beschlagteil 18 auf den Rahmen 3 übertragen, um den Antrieb der Lüftungsklappe 2 umzusetzen. Die Aufnahme 17 ist dabei durch das zweite Gehäuseende 13 hindurchgeführt.

Ebenfalls ersichtlich ist ein Entkopplungselement 19, durch welches die Aufnahme 17 hindurchgeführt ist. Das Entkopplungselement 19 ist elastisch und/oder ringförmig ausgebildet und dient zur Schallentkopplung zwischen der Beschlaganordnung 1, insbesondere der Antriebseinrichtung 4, mit den angrenzenden Bereichen der Lüftungsklappe 2.

Weiterhin ist anhand von Fig. 4 ein an das Antriebsmittel 7 angebundenes Kopplungselement 20 ersichtlich. Das Kopplungselement 20 ist in einem endseitigen Mundstück des Antriebsmittels 7 aufgenommen bzw. hindurchgeführt. Das Kopplungselement 20 ist quer zur Bewegungsrichtung des Antriebsmittels 7 verlaufend und stangenförmig ausgebildet.

Wie wiederum anhand von Fig. 1 ersichtlich, greift das Kopplungselement 20 in die Kulissenführung 6 bzw. die Abschnitte 7, 8 der Kulissenführung 6 ein. Mit anderen Worten wirkt das Antriebsmittel 7 mittelbar über das Kopplungselement 20 mit der Kulissenführung 6 zusammen. Dabei fungiert das Kopplungselement 20 als Kulissenstein, wobei das Kopplungselement 20 beim Verfahren des Antriebsmittels 7 zunächst, zum Entriegeln der Lüftungsklappe 2 den ersten weiteren Abschnitt 9 überfährt, anschließend zur Umsetzung der Dreh- bzw. Öffnungsbewegung den wendelförmigen Abschnitt 8 durchfährt und schließlich, zum Beenden der Öffnungsbewegung und stabilen Festsetzung der Lüftungsklappe 2, den zweiten weiteren Abschnitt 9 der Kulissenführung 6 durchfährt.

Das Kopplungsmittel 20 durchgreift dabei die gegenüberliegenden Abschnitte 8, 9 der Kulissenführung 6.

Insbesondere steht das Kopplungselement 20 beidseitig gegenüber der Übertragungseinrichtung 5 bzw. dem Gehäuse 11 der Übertragungseinrichtung 5 hervor, so dass beidseitig freistehende Enden des Kopplungselements 20 ausgebildet sind.

An den Enden des Kopplungselement 20 sind als Treibstangen ausgebildete Beschlagelemente 21 zur Ent- oder Verriegelung der Lüftungsklappe 2 angebunden. Die Beschlagelemente 21 können sich über einen Großteil der Länge der Lüftungsklappe 2 bzw. des Rahmens 3 erstrecken oder wirken mit weiteren langgestrecken Treibstangen zusammen. Die Beschlagelemente 21 können dabei entlang ihrer Länge mehrere integrierte Verschlusspunkte aufweisen, die zum Verriegeln der Lüftungsklappe 2 mit korrespondierenden Verschlussabschnitten des Rahmens in Eingriff bringbar sind. Durch Verfahren des Kopplungselements 20 mit den Beschlagelementen 21 und den daran angebundenen Verschlusspunkten in der einen Richtung lässt sich die Verriegelung gegenüber dem Rahmen 3 entsprechend auflösen, um im Anschluss daran durch weiteres Verfahren des Kopplungselements 20 eine relative Drehung des Übertragungsmittels 10 bzw. der Kulissenführung 6 und letztlich des als Ausstellarms ausgebildeten Beschlagteils 18 zu bewirken.

Im Hinblick auf eine kompakte Bauweise ist vorgesehen, dass das Antriebsmittel 7 innerhalb des Übertragungsmittels 10 verfahrbar ist. Dementsprechend erstreckt sich das Kopplungselement 20 beidseitig ausgehend vom Antriebsmittel 7 und durchgreift letztlich das Übertragungsmittel 10 bzw. die Kulissenführung 6 bis hin zu den Anbindungspunkten der Beschlagelemente 21.

Beim dargestellten und bevorzugten Ausführungsbeispiel ist das Antriebsmittel 7 als Kolbenstange mit endseitigem Mundstück zur Aufnahme des Kopplungselements 20 ausgebildet. Die Antriebseinrichtung 4 kann dabei als Spindelantrieb für das Antriebsmittel 7 fungieren. Es sind jedoch auch andere technische Lösungen möglich, wonach das Antriebsmittel 4 als elektrischer, hydraulischer oder pneumatischer Motor und das Antriebsmittel 7 als Zahnstange oder sonstiges Hubelement ausgebildet ist.

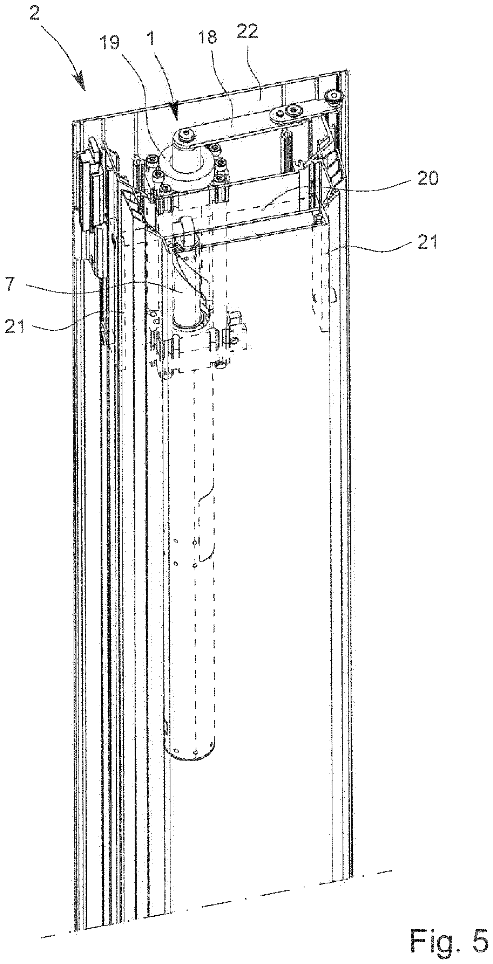

In Fig. 5 ist die erfindungsgemäße Beschlaganordnung 1 in einem in der Lüftungsklappe 2 aufgenommenen bzw. verbauten Zustand gezeigt. Die Beschlaganordnung 1 ist dabei vollständig in einem Hohlprofilbereich der Lüftungsklappe 1 aufgenommen und im verbauten Zustand bzw. im Einsatzzustand von außen nicht sichtbar. Vorzugsweise ist die Beschlaganordnung 1 lediglich an einer Seite, vorzugsweise an einer Oberseite, mit der Lüftungsklappe 2 verbunden, vorzugsweise kraftschlüssig, insbesondere durch Verschrauben.

Gemäß einer besonders zweckmäßigen Anbindung ist das zweite Gehäuseende 13 der Beschlaganordnung 1 mit einem gegenüberliegenden Abschnitt der Lüftungsklappe 2 verbunden, vorzugsweise verschraubt. Hierzu sind am zweiten Gehäuseende 13 entsprechende Gewindebohrungen bzw. Gewindeabschnitte vorgesehen. Im Einbauzustand befindet sich das Entkopplungselement 19 zwischen dem zweiten Gehäuseende 13 und dem angrenzenden Abschnitt der Lüftungsklappe 2, so dass eine direkte Kontaktierung zwischen Lüftungsklappe 2 und Beschlagteilanordnung 1 bzw. dem Gehäuse 11 der Beschlagteilanordnung 1 vermieden wird.

Im Rahmen der vorliegenden Erfindung wird auch eine Maßnahme zum Drehen bzw. Verschwenken der Lüftungsklappe 2 bei einem Ausfall der Beschlaganordnung 1 bzw. zur Notentriegelung vorgeschlagen.

Konkret kann hierzu die Lüftungsklappe 2 frontseitig und/oder an ihrem Frontalprofil 22 eine nicht im Einzelnen dargestellte Markierung, beispielsweise in Form einer Einkerbung, Aufrauhung oder einer sonstigen Signalisierung, aufweisen. Diese Markierung ist dabei auf Höhe bzw. im Bereich des Spannmittels 16 des ersten Gehäuseendes 12 des Gehäuses 11 vorgesehen. Grundsätzlich kann statt einer Markierung auch eine herstellerseitig zur Verfügung gestellte Schablone oder dergleichen mit einer Markierung vorgesehen sein.

Dadurch kann von außen, nach erfolgter Durchbrechung des Frontalprofils 22 im Bereich der Markierung, ein Auflösen der Klemmverbindung am ersten Gehäuseende 12 durch Verstellen bzw. Lösen des Spannmittels 16 erfolgen. Hierdurch wir die Klemmverbindung zwischen dem Gehäuse 11 und der Antriebseinrichtung 4 aufgelöst. Im Anschluss daran kann dann durch randseitiges Hintergreifen des Frontalprofils 22 in das Innere des Hohlraums der Lüftungsklappe 2 und damit im Bereich der Beschlaganordnung 1 Zugang verschafft werden. Dies ermöglicht eine Entkopplung bzw. Verschiebung der Antriebseinrichtung 4 relativ zur Übertragungseinrichtung 5.

Hierzu kann beispielsweise direkt an dem Kopplungselement 20 angegriffen werden, wobei ein Verschieben des Kopplungselements 20 zu einer Verschiebung der Beschlagelemente 21 und letztlich zu einer Entriegelung der Lüftungsklappe 2 führt. Bei weiterer manueller Verschiebung kommt es dann in Folge des Zusammenwirkens mit der Kulissenführung 6 zu einer Dehung der Kulissenführung 6 bzw. des Übertragungsmittels 10 und letztlich des weiteren Beschlagteils 18 bzw. des Ausstellarms. Durch die damit erzwungene Entriegelung und Öffnung der Lüftungsklappe 2 kann dann der Zugang zum Inneren der Lüftungsklappe 2 und letztlich der Austausch und/oder die Reparatur der defekten Beschlaganordnung 1 umgesetzt werden.

Aus der in Fig. 6 gezeigten Lüftungsklappenanordnung ist ersichtlich, dass die erfindungsgemäße Beschlaganordnung 1 sich insbesondere zum Einbau in langgestreckten und/oder schmal ausgebildeten Lüftungsklappen 2, deren Länge eine zugeordnete Breite um ein Vielfaches übersteigt, eignet.

### Bezugszeichenliste:

- 1: Beschlaganordnung
- 2: Lüftungsklappe
- 3: Rahmen
- 4: Antriebseinrichtung
- 5: Übertragungseinrichtung
- 6: Kulissenführung
- 7: Antriebsmittel
- 8: Abschnitt
- 9: weiterer Abschnitt
- 10: Übertragungsmittel
- 11: Gehäuse
- 12: Gehäuseende
- 13: Gehäuseende
- 14: Verbindungsmittel
- 15: Klemmbauteil
- 16: Spannmittel
- 17: Aufnahme
- 18: weiteres Beschlagteil
- 19: Entkopplungselement
- 20: Kopplungselement
- 21: Beschlagelement
- 22: Frontalprofil

## Patentansprüche

1. Beschlaganordnung (1) für eine auf- oder zuschwenkbare und ent- oder verriegelbare Lüftungsklappe (2) einer Gebäudeöffnung, mit einer Antriebseinrichtung (4) und einer Übertragungseinrichtung (5), wobei die Antriebseinrichtung (4) und die Übertragungseinrichtung (5) derart zusammenwirken, dass eine Ent- oder Verriegelung und eine anschließende Auf- und Zuschwenkung vorgesehen ist,
**dadurch gekennzeichnet,**
**dass** die Übertragungseinrichtung (5) eine drehbare Kulissenführung (6) aufweist, die derart mit einem Antriebsmittel (7) der Antriebseinrichtung (4) zusammenwirkt, dass das lineare Verfahren des Antriebsmittels (7) zu einer Relativbewegung der Kulissenführung (6) in Drehrichtung relativ zum Antriebsmittel (7) führt, wobei am Antriebsmittel (7) ein mit der Kulissenführung (6) zusammenwirkendes und/oder in die Kulissenführung (6) eingreifendes Kopplungselement (20) vorgesehen ist und wobei an gegenüberliegenden Enden des Kopplungselements (20) ein Beschlagelement (21) zur Ent- oder Verriegelung der Lüftungsklappe (2) vorgesehen ist.

2. Beschlaganordnung nach Anspruch 1, **dadurch gekennzeichnet, dass** die Kulissenführung (6) wenigstens einen als Nut und/oder Schlitz ausgebildeten wendelförmigen Abschnitt (8) aufweist.

3. Beschlaganordnung nach Anspruch 1 oder 2, **dadurch gekennzeichnet, dass** die Kulissenführung (6) wenigstens einen als Nut und/oder Schlitz ausgebildeten, schräg zur Bewegungsrichtung des Antriebsmittels (7) verlaufenden Abschnitt aufweist.

4. Beschlaganordnung nach einem der vorhergehenden Ansprüche, **dadurch gekennzeichnet, dass** die Kulissenführung (6) wenigstens zwei einander gegenüberliegende wendelförmige Abschnitte (8) oder schräg verlaufende Abschnitte aufweist.

5. Beschlaganordnung nach einem der vorhergehenden Ansprüche, **dadurch gekennzeichnet, dass** die Kulissenführung (6) wenigstens einen sich in Bewegungsrichtung des Antriebsmittels (7) erstreckenden weiteren Abschnitt (9), der dem wendelförmigen Abschnitt (8) oder dem schräg verlaufenden Abschnitt vor- und/oder nachgelagert ist, aufweist, wobei, vorzugsweise, jedem wendelförmigen Abschnitt (8) oder schräg verlaufenden Abschnitt ein weiterer Abschnitt (9) vor- und/oder nachgelagert ist.

6. Beschlaganordnung nach einem der vorhergehenden Ansprüche, **dadurch gekennzeichnet, dass** die Kulissenführung (6) an einem einen Hohlzylinder aufweisenden und/oder einen Hohlzylinder ausbildenden Übertragungsmittel (10) vorgesehen ist.

7. Beschlaganordnung nach Anspruch 6, **dadurch gekennzeichnet, dass** das Übertragungsmittel (10) in einem an der Antriebseinrichtung (4) befestigten Gehäuse (11) drehgelagert ist.

8. Beschlaganordnung nach Anspruch 7, **dadurch gekennzeichnet, dass** das Gehäuse (11) ein erstes Gehäuseende (12) zur Befestigung an der Antriebseinrichtung (4) und Drehlagerung des Übertragungsmittels (10) und ein zweites Gehäuseende (13) zur Drehlagerung des Übertragungsmittels (10) aufweist, wobei, vorzugsweise, das erste Gehäuseende (12) mit dem zweiten Gehäuseende (13) über eine Mehrzahl von voneinander beabstandeten, insbesondere stabförmigen, Verbindungsmitteln (14) verbunden ist.

9. Beschlaganordnung nach einem der Ansprüche 6 bis 8, **dadurch gekennzeichnet, dass** am Übertragungsmittel (10) an seinem der Antriebseinrichtung (4) abgewandten Ende eine Aufnahme (17) für ein insbesondere als Ausstellarm ausgebildetes weiteres Beschlagteil (18) zum Auf- und Zuschwenken der Lüftungsklappe (2) vorgesehen ist, wobei, vorzugsweise, die Aufnahme (17) durch das zweite Gehäuseende (13) hindurchgeführt ist und/oder wobei im Bereich der Aufnahme (17) ein insbesondere elastisches und/oder ringförmiges Entkopplungselement (19) vorgesehen ist.

10. Beschlaganordnung nach einem der Ansprüche 6 bis 9, **dadurch gekennzeichnet, dass** das Antriebsmittel (7) innerhalb des Übertragungsmittels (10) verfahrbar ist.

11. Beschlaganordnung nach einem der vorhergehenden Ansprüche, **dadurch gekennzeichnet, dass** das Kopplungselement (20) quer zur Bewegungsrichtung des Antriebsmittels (7) verläuft und/oder stabförmig ausgebildet ist.

12. Beschlaganordnung nach einem der vorhergehenden Ansprüche, **dadurch gekennzeichnet, dass** das Beschlagelement (21) als Treibstange ausgebildet ist.

13. Beschlaganordnung nach einem der vorhergehenden Ansprüche, **dadurch gekennzeichnet, dass** die Antriebseinrichtung (4) einen Spindelantrieb mit ausfahrbarer Spindel als Antriebsmittel (7), und/oder einen elektrischen, hydraulischen oder pneumatischen Motor, jeweils mit Zahnstange oder einem sonstigen Hubelement als Antriebsmittel (7), aufweist.

14. Lüftungsklappe (2) mit einer Beschlaganordnung (1) nach einem der vorhergehenden Ansprüche.

15. Lüftungsanordnung mit einem Rahmen (3) und einer Lüftungsklappe (2) nach dem vorhergehenden Anspruch.

## Claims

1. Fitting arrangement (1) for a ventilation flap (2) of a building opening which can be swung open or closed and unlocked or locked, having a drive device (4) and a transmission device (5), the drive device (4) and the transmission device (5) interacting in such a way that unlocking or locking and subsequent swinging open and closed are provided,
**characterized in that**
the transmission device (5) has a rotatable link guide (6) which interacts with a drive means (7) of the drive device (4) in such a way that the linear movement of the drive means (7) leads to a relative movement of the link guide (6) in the direction of rotation relative to the drive means (7), wherein a coupling element (20) cooperating with the link guide (6) and/or engaging in the link guide (6) is provided on the drive means (7) and wherein a fitting element (21) for unlocking or locking the ventilation flap (2) is provided at opposite ends of the coupling element (20).

2. Fitting arrangement according to claim 1, **characterized in that** the link guide (6) has at least one helical section (8) designed as a groove and/or slot.

3. Fitting arrangement according to claim 1 or 2, **characterized in that** the link guide (6) has at least one section in the form of a groove and/or slot running at an angle to the direction of movement of the drive means (7).

4. Fitting arrangement according to one of the preceding claims, **characterized in that** the link guide (6) has at least two opposing helical sections (8) or obliquely extending sections.

5. Fitting arrangement according to one of the preceding claims, **characterized in that** the link guide (6) has at least one further section (9) which extends in the direction of movement of the drive means (7) and which is located before and/or after the helical section (8) or the obliquely extending section, wherein, preferably, a further section (9) is located before and/or after helical section (8) or obliquely extending section.

6. Fitting arrangement according to one of the preceding claims, **characterized in that** the link guide (6) is provided on a transmission means (10) having a hollow cylinder and/or forming a hollow cylinder.

7. Fitting arrangement according to claim 6, **characterized in that** the transmission means (10) is rotatably mounted in a housing (11) attached to the drive device (4).

8. Fitting arrangement according to claim 7, **characterized in that** the housing (11) has a first housing end (12) for fastening to the drive device (4) and rotational mounting of the transmission means (10) and a second housing end (13) for rotational mounting of the transmission means (10), the first housing end (12) preferably being connected to the second housing end (13) via a plurality of spaced-apart, in particular rod-shaped, connecting means (14).

9. Fitting arrangement according to one of claims 6 to 8, **characterized in that** a receptacle (17) for a further fitting part (18), designed in particular as an extension arm, for swinging the ventilation flap (2) open and closed is provided on the transmission means (10) at its end facing away from the drive device (4), wherein, preferably, the receptacle (17) is guided through the second housing end (13) and/or wherein an in particular elastic and/or annular decoupling element (19) is provided in the region of the receptacle (17).

10. Fitting arrangement according to one of claims 6 to 9, **characterized in that** the drive means (7) is movable within the transmission means (10).

11. Fitting arrangement according to one of the preceding claims, **characterized in that** the coupling element (20) extends transversely to the direction of movement of the drive means (7) and/or is rod-shaped.

12. Fitting arrangement according to one of the preceding claims, **characterized in that** the fitting element (21) is designed as a drive rod.

13. Fitting arrangement according to one of the preceding claims, **characterized in that** the drive device (4) has a spindle drive with an extendable spindle as drive means (7), and/or an electric, hydraulic or pneumatic motor, in each case with a toothed rack or another lifting element as drive means (7).

14. Ventilation flap (2) with a fitting arrangement (1) according to one of the preceding claims.

15. Ventilation arrangement comprising a frame (3) and a ventilation flap (2) according to the preceding claim.

## Revendications

1. Agencement de ferrure (1) pour un clapet de ventilation (2) d'une ouverture de bâtiment pouvant être ouvert ou fermé par pivotement et déverrouillé ou verrouillé, comprenant un dispositif d'entraînement (4) et un dispositif de transmission (5), le dispositif d'entraînement (4) et le dispositif de transmission (5) coopérant de telle sorte qu'il est prévu un déverrouillage ou un verrouillage suivi d'un pivotement d'ouverture et de fermeture,
**caractérisé en ce que**
le dispositif de transmission (5) présente un guide de coulisse (6) rotatif qui coopère avec un moyen d'entraînement (7) du dispositif d'entraînement (4) de telle sorte que le déplacement linéaire du moyen d'entraînement (7) entraîne un mouvement relatif du guide de coulisse (6) dans le sens de rotation par rapport au moyen d'entraînement (7), un élément de couplage (20) coopérant avec le guide de coulisse (6) et/ou s'engageant dans le guide de coulisse (6) étant prévu sur le moyen d'entraînement (7) et un élément de ferrure (21) étant prévu aux extrémités opposées de l'élément de couplage (20) pour le déverrouillage ou le verrouillage du clapet de ventilation (2).

2. Agencement de ferrure selon la revendication 1, **caractérisé en ce que** le guide de coulisse (6) présente au moins une section (8) en forme d'hélice réalisée sous forme de rainure et/ou de fente.

3. Agencement de ferrure selon la revendication 1 ou 2, **caractérisé en ce que** le guide de coulisse (6) présente au moins une section conçue comme une rainure et/ou une fente et s'étendant en oblique par rapport au sens de déplacement du moyen d'entraînement (7).

4. Agencement de ferrure selon l'une des revendications précédentes, **caractérisé en ce que** le guide de coulisse (6) présente au moins deux sections hélicoïdales (8) opposées l'une à l'autre ou des sections inclinées.

5. Agencement de ferrure selon l'une des revendications précédentes, **caractérisé en ce que** le guide de coulisse (6) présente au moins une autre section (9) s'étendant dans le sens de déplacement du moyen d'entraînement (7), qui est placée en amont et/ou en aval de la section hélicoïdale (8) ou de la section oblique, sachant que, de préférence, une autre section (9) est placée en amont et/ou en aval de chaque section hélicoïdale (8) ou de chaque section oblique.

6. Agencement de ferrure selon l'une des revendications précédentes, **caractérisé en ce que** le guide de coulisse (6) est prévu sur un moyen de transmission (10) présentant un cylindre creux et/ou formant un cylindre creux.

7. Agencement de ferrure selon la revendication 6, **caractérisé en ce que** le moyen de transmission (10) est monté en rotation dans un boîtier (11) fixé au dispositif d'entraînement (4).

8. Agencement de ferrure selon la revendication 7, **caractérisé en ce que** le boîtier (11) présente une première extrémité de boîtier (12) pour la fixation sur le dispositif d'entraînement (4) et le montage en rotation du moyen de transmission (10) et une deuxième extrémité de boîtier (13) pour le montage en rotation du moyen de transmission (10), la première extrémité de boîtier (12) étant de préférence reliée à la deuxième extrémité de boîtier (13) par une pluralité de moyens de liaison (14) espacés les uns des autres, en particulier en forme de tige.

9. Agencement de ferrure selon l'une des revendications 6 à 8, **caractérisé en ce qu'**il est prévu sur le moyen de transmission (10), à son extrémité opposée au dispositif d'entraînement (4), un logement (17) pour une autre pièce de ferrure (18) réalisée en particulier sous la forme d'un bras de projection pour le pivotement vers le haut et vers le bas du clapet de ventilation (2), le logement (17) traversant de préférence la deuxième extrémité de boîtier (13) et/ou un élément de découplage (19) en particulier élastique et/ou annulaire étant prévu dans la zone du logement (17).

10. Agencement de ferrure selon l'une des revendications 6 à 9, **caractérisé en ce que** le moyen d'entraînement (7) est déplaçable à l'intérieur du moyen de transmission (10).

11. Agencement de ferrure selon l'une des revendications précédentes, **caractérisé en ce que** l'élément de couplage (20) s'étend transversalement à la direction de déplacement du moyen d'entraînement (7) et/ou est réalisé en forme de tige.

12. Agencement de ferrure selon l'une des revendications précédentes, **caractérisé en ce que** l'élément de ferrure (21) est conçu comme une tringle de commande.

13. Agencement de ferrure selon l'une des revendications précédentes, **caractérisé en ce que** le dispositif d'entraînement (4) comporte un entraînement à broche avec broche déployable comme moyen d'entraînement (7), et/ou un moteur électrique, hydraulique ou pneumatique, chacun avec une crémaillère ou un autre élément de levage comme moyen d'entraînement (7).

14. Clapet de ventilation (2) comprenant un agencement de ferrure (1) selon l'une des revendications précédentes.

15. Agencement de ventilation comprenant un cadre (3) et un clapet de ventilation (2) selon la revendication précédente.
